# EUROPEAN PATENT APPLICATION

(11) **EP 4 040 434 A1**
(43) Date of publication of application: **10.08.2022**
(21) Application number: 22154655.9
(22) Date of filing: 01.02.2022
(51) Int. Cl.: G10L 15/22, G10L 17/00, H04L 12/28

(54) **PERSON RECOGNITION BASED ON VOICE PATTERNS IN HOME AUTOMATION**

(30) Priority: 04.02.2021 BE 202105079
(71) Applicant: Niko NV, 9100 Sint-Niklaas (BE)
(72) Inventor: DE MEY, Jens, 9220 Moerzeke (BE); VERHELST, Marian, 2800 Mechelen (BE); LAUWEREINS, Steven, 9700 Oudenaarde (BE)
(74) Representative: DenK iP bv

(57) **Abstract**

The present invention relates to a home automation system comprising at least one electric or electronic device, an acoustic module comprising an acoustic sensor and a voice pattern recognition device for recognizing voice sound, the pattern recognition device further comprising a storage medium for storing a plurality of voice patterns. The acoustic module further comprises a voice pattern correlation device for correlating each stored voice pattern to parameters of a predetermined setting of the at least one electric or electronic device and means for, upon detecting voice sound, determining the voice pattern of the voice sound and determine the correlated settings for the at least one electric or electronic device. The home automation system further comprises means for sending a signal to the at least one electric or electronic device for activating that at least one electric or electronic device according to the predetermined setting.

## Description

### Technical field of the invention

The present invention relates to person recognition in home automation. More particularly, the present invention relates to person recognition based on voice patterns.

### Background of the invention

Smart home and smart building technologies are based on the concept of automation and remote control. For example, several functions of the building are automatized, programmable, and/or can be controlled remotely. This improves energy efficiency, comfort, and security. In case of, for example, smart lighting devices or systems, sensing functions, dimming options and programmed activation and deactivation can be included in and controlled by a control unit. This control unit may be controlled or monitored remotely, e.g. via internet. In particular cases, a user only has to speak a query or command out loud and the control unit will control a device accordingly.

A speech-enabled environment (e.g., home, workplace, school, etc.) can be implemented using acoustic sensing devices which may be located at required locations in a building.

According to known speech-enabled systems, mostly a specific command is required to activate a particular electric or electronic device. An example hereof is described in US 2018/323991. In this document, methods, systems and devices for an assistant device driven set of actions associated with scenes. Scenes can include events which occur throughout the day (e.g. bedtime, morning, movie night, etc.). Users can thus use the disclosed features to customize their homes to create an automated home environment. The user has to give user instructions, which are in fact commands, to activate an electric or electronic device the way he/she wants. It is also possible to activate scenes to activate more than one electric or electronic device at the same time in that way. For example, a user can give the user instruction "initiate morning scene" to e.g. open the curtains, make the coffee and turn on the TV to the appropriate channel.

Hence, a user has to memorize all commands necessary to activate all electric or electronic device present in his or her home automation system.

Further, for known speech-enabled systems processing of the commands detected by the acoustic sensing devices is done in the cloud because there are not enough resources to do this locally. A disadvantage of cloud-based systems is that there can be privacy issues as the data is not kept locally but in the cloud. Further, cloud-based systems may be also be network dependent and can be slow.

### Summary of the invention

It is an object of embodiments of the present invention to provide a way of controlling a home automation system by means of voice pattern recognition without requiring a connection with the cloud for processing the collected data.

The above objective is accomplished by a device and a method according to embodiments of the present invention.

The present invention provides a home automation system. The home automation system comprises at least one electric or electronic device, such as, for example, lighting devices, HVAC devices, motors for e.g. blinds, ventilation devices, or any other electric or electronic device that can be controlled in a home automation system. The home automation system further comprises at least one acoustic module, each of the at least one acoustic modules comprising an acoustic sensor, a voice pattern recognition device for recognizing voice sound, the pattern recognition device further comprising a storage medium for storing a plurality of voice patterns, and a voice pattern correlation device for correlating each stored voice pattern to parameters of a predetermined setting of the at least one electric or electronic device, and comprising means for, upon detecting voice sound, determining the voice pattern of the voice sound and determine the correlated settings for the at least one device. The home automation system further comprises means for sending a signal to the at least one device for activating that at least one device according to the predetermined setting.

In a home automation system according to embodiments of the invention, electric or electronic devices can be activated according to preferences of a particular user, as the user can be recognized by his or her voice pattern. A voice pattern is a characteristic of verbal expression. As each person has a unique voice pattern, a person can be identified by analysing that voice pattern. This is what the invention is based on. Hence, according to embodiments of the invention, when the user says something like "hi" or the like, his or her voice pattern is compared to voice patterns stored in the storage medium of the home automation system, and when the user is identified, his or her preferences are sent to the at least one electric or electronic device for activating it according to these preferences. In that way, the home automation system according to embodiments of the invention recognizes the user and activates the at least one electric or electronic device according to predefined settings of the user.

An advantage of a system according to embodiments of the invention is that processing or analysing of the voice sound is done locally, i.e. in the acoustic module, and not in the cloud. An advantage hereof is that there is not liability on a 3^{rd} party internet connection. From a customer's point of view this may avoid privacy issues as data is kept within the home and is not stored on a server at a different location.

A further advantage of a system according to embodiments of the inventions is that no specific commands are required. So a user does not have to remember the correct command correlated with a particular setting for activating a device, but can just say anything that comes in his or her mind, for activating the required setting of the device. The only requirement is that his voice pattern is stored in the storage medium of the voice pattern recognition device. This can be done at the time of configuration of the acoustic sensor or can be done later, whenever there is a new user.

According to embodiments of the invention, the acoustic sensor may furthermore comprise means for sending stored parameters correlated to a particular voice pattern to another acoustic module at another location. In that way, all available acoustic modules in the home automation system can be configured without having to repeat all configuration steps for every new electric or electronic device.

According to embodiments of the invention, the home automation system may comprise a plurality of electric or electronic devices, and sending a signal to the at least one electric or electronic device may comprise sending a signal to the plurality of electric or electronic devices to activate these devices according to the predetermined settings to create a mood. The acoustic module may be located at any suitable location within a building. For example, the acoustic module may be located in a wall or a ceiling of a building, or may be located on top of a table, a closet or the like.

The present invention further provides a method for activating at least one electric or electric device according to a predetermined setting preferred by a user by means of voice sound. The method comprises a user reading some sentences, detecting, by the acoustic sensor, the voice sound of the user, determining, by the voice pattern recognition device, the voice pattern of the voice sound of that user, and storing that voice pattern in the storage medium in the voice pattern recognition device of the acoustic module.

According to embodiments of the invention, the method may further comprise, before detecting a voice sound, configuring the acoustic module by a user reading some sentences, determining, by the acoustic module, the voice pattern of that user, and storing that voice pattern in the storage medium in the voice pattern recognitions device of the acoustic module. According to further embodiments, configuring the acoustic module may further comprise correlating the stored voice patterns in the storage medium to parameters of a predetermined setting of the at least one electric or electronic device.

The method may, according to embodiments of the invention, further comprise sending stored parameters correlated to a particular voice pattern to at least one other acoustic module at another location.

### Brief description of the drawings

It has to be noted that same reference signs in the different figures refer to same, similar or analogous elements.
Fig. 1 schematically illustrates a home automation system according to embodiments of the invention.
Fig. 2 schematically illustrates a home automation system according to embodiments of the invention.

### Description of illustrative embodiments

In the description different embodiments will be used to describe the invention. Therefore reference will be made to different drawings. It has to be understood that these drawings are intended to be non-limiting, the invention is only limited by the claims. The drawings are thus for illustrative purposes, the size of some of the elements in the drawings may be exaggerated for clarity purposes.

The term "comprising" is not to be interpreted as limiting the invention in any way. The term "comprising", used in the claims, is not intended to be restricted to what means is described thereafter; it does not exclude other elements, parts or steps.

The term "connected" as used in the claims and in the description has not to be interpreted as being restricted to direct connections, unless otherwise specified. Thus, part A being connected to part B is not limited to part A being in direct contact to part B, but also includes indirect contact between part A and part B, in other words also includes the case where intermediate parts are present in between part A and part B.

Not all embodiments of the invention comprise all features of the invention. In the following description and claims, any of the claimed embodiments can be used in any combination.

The present invention provides a home automation system. The home automation system comprises at least one electric or electronic device and at least one acoustic module. Each of the at least one acoustic module comprises an acoustic sensor for detecting voice sound (9), a voice pattern recognition device for recognizing a voice pattern in the detected voice sound and compare it to at least one known voice pattern stored in a storage medium in the voice pattern recognition device, and a voice pattern correlation device for, upon recognizing the detected voice pattern from the at least one stored voice pattern, correlating the detected voice pattern to parameters of a predetermined setting of the at least one electric or electronic device. The home automation system further comprises means for sending a signal to the at least one device for activating that at least one device according to the predetermined setting.

In a home automation system according to embodiments of the invention, electric or electronic devices can be activated according to preferences of a particular user, as the user can be recognized by his or her voice pattern. A voice pattern is a characteristic of verbal expression. As each person has a unique voice pattern, a person can be identified by analysing that voice pattern. This is what the invention is based on. Hence, according to embodiments of the invention, when the user says something like "hi" or the like, his or her voice pattern is compared to voice patterns stored in the storage medium of the home automation system, and when the user is identified, his or her preferences are sent to the at least one electric or electronic device for activating it according to these preferences. In that way, the home automation system according to embodiments of the invention recognizes the user and activates the at least one electric or electronic device according to predefined settings of the user.

An advantage of a system according to embodiments of the invention is that processing or analysing of the voice sound is done locally, i.e. in the acoustic module, and not in the cloud. An advantage hereof is that there is not liability on a 3^{rd} party internet connection. From a customer's point of view this may avoid privacy issues as data is kept within the home and is not stored on a server at a different location.

A further advantage of a system according to embodiments of the inventions is that no specific commands are required. So a user does not have to remember the correct command correlated with a particular setting for activating a device, but can just say anything that comes in his or her mind, for activating the required setting of the device. The only requirement is that his voice pattern is stored in the storage medium of the voice pattern recognition device. This can be done at the time of configuration of the acoustic sensor or can be done later, whenever there is a new user.

The present invention will hereinafter be described by means of different embodiments. It has to be understood that these embodiments are only for the ease of understanding the invention and are not intended to limit the invention in any way.

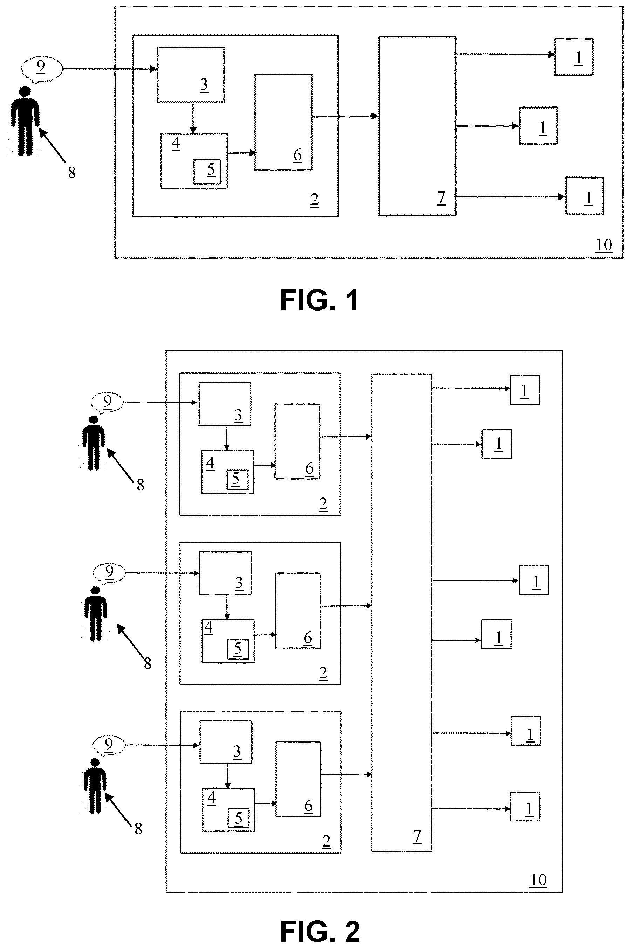

Fig. 1 schematically illustrates a home automation system 10 according to embodiments of the invention. The home automation system 10 comprises at least one electric or electronic device 1. In the example given in Fig. 1, the home automation system 10 comprises three electric or electronic devices. However, this is not intended to limit the invention in any way. The home automation system 10 can have any number of electric or electronic devices as required by a user 8. The at least one electric or electronic device 1 may be one of or a combination of a lighting device, an HVAC device, a motor for e.g. blinds, a ventilation device, or any other electric or electronic device that can be controlled in a home automation system.

The home automation system 10 comprises at least one acoustic module 2. In each of the acoustic module 2, voice sound 9 coming from a user 8 is processed. The acoustic module 2 may be located at any suitable location within a room of a building. For example, the acoustic module 2 may be located in a wall or a ceiling of the room, or may be located on top of a table, a closet or the like. Actually, the acoustic module 2 may be located anywhere in the room, as it just has to be able to detect voice sound 9 from the user 8. According to preferred embodiments of the invention, the home automation system 10 may comprise a plurality of acoustic modules 2 (see Fig. 2), distributed at different locations in different rooms of the building. For example, but not limiting the invention in any way, an acoustic module 2 may be provided in the kitchen, two acoustic modules 2 may be provided in the living room, another acoustic module 2 may be provided in the bathroom, and acoustic modules 2 may be provided in each of the sleeping rooms.

The acoustic module 2 comprises an acoustic sensor 3. The acoustic sensor 3 is adapted for detecting voice sound 9 of the user 8. Contrary to existing systems, according to embodiments of the invention, the system is not limited to particular commands to be said by the user 8. It is sufficient just to say something, so that the acoustic sensor 3 can detect voice sound 9 of the user 8. The acoustic sensor 3 captures sound from the surrounding, i.e. sound in the room. Upon detecting voice sound 9 from a user 8, this voice sound 9 is sent to a voice pattern recognition system 4 where it is processed. In the voice pattern recognition system 4, a pattern of the detected voice sound 9 is compared to known voice patterns stored in a storage medium 5 in the voice pattern recognition system 4. The known voice patterns are stored in the storage medium 5 during configuration of the system 10. For configuring this system, the following steps are necessary. First, a user 8 has to read some sentences to make the system 10 familiar with the voice pattern in the voice sound 9 of that particular user 8. Once the voice pattern is determined, it is stored in the storage medium 5 of the voice pattern recognition device 4.

After detecting voice sound 9, the voice pattern may be determined by making MEL frequency cepstral coefficients (MFCCs). These coefficients are used for making up a Gaussian mixture model (GMM) from the collected data. When voice sound is detected, the GMM of the detected voice sound is compared to GMMs of known users 8 that are stored in the storage medium 5 in the voice pattern recognition device 4 and to a basic model. If there is a high similarity with a stored GMM, the detected voice sound is indicated as 'known'. When the detected voice pattern is recognized as one of the at least one stored voice patterns, a voice pattern correlation device 6 will correlate that voice pattern to parameters of a predetermined setting of the at least one electric or electronic device 1. These parameters may, according to embodiments of the invention, be predefined or predetermined and pre-programmed settings or moods in the home automation system 10, coupled to a particular user 8 and/or a certain time period and/or a certain location. Once this correlation between the detected voice pattern and the parameters of the predetermined settings is done, the means 7 for sending a signal to the at least one device for activating the at least one electric or electronic device 1 according to the predetermined setting is activated. Such correlation is also stored in the storage medium before using the system. For example, user A prefers setting the lights at 80% and setting the heating at 21°C when he or she comes home. These settings are stored in the storage medium of the home automation system. When user A comes home and says something likes "Hi" or the like, his or her voice pattern will be correlated with his or her preferred settings and the lights will be set at 80% and the heating will be turned on at 21°C. Such settings can be changed at any time and again stored in the storage medium, whenever this would be required.

According to embodiments of the invention, and as illustrated in Fig. 1, the home automation system 10 may comprise a plurality of electric or electronic devices 1. In that case, there is a predetermined setting for each one of the plurality of electric or electronic devices 1 which together are defined as a mood.

For example, when a user 8 comes home in the evening, the preferred mood may be that the blinds are activated to close, the light is activated to dim to a certain level and the heating is activated to a certain degree. To obtain that, the user 8 may come home and say "hi" or any other word or sound that comes to his or her mind. The acoustic sensor 2 will detect that voice sound 9 and the voice pattern recognition device 4 will recognize the voice pattern of that voice sound 9 by comparing the detected voice pattern to the known voice patterns stored in the storage medium 5. Once the voice pattern is determined, it will be correlated to the corresponding parameters of the settings of the electric or electronic devices 1 preferred by the user 8. The home automation system 10 will send signals to, in the example given above, the lighting devices, the blinds and the heating to create the preferred mood of that user 8.

According to embodiments of the invention, the acoustic module 2 may furthermore comprise means for sending stored parameters correlated to a particular voice pattern to other acoustic modules at another location in the building. According to such embodiments, the Gaussian mixture model (GMM) of a user 8 can be sent to the other acoustic modules 2 present in the building. This can be done for all users 8 of the home automation system 10. In that way, configuration of the acoustic module 2 only has to be done once, and not separately for all acoustic modules 2 present in the building. For the non-limiting example above, in the case where acoustic modules 2 are provided in the kitchen, living room, bathroom and sleeping rooms, for example the acoustic module 2 in the kitchen can be configured by the users 8 reading the sentences and the corresponding voice patterns being stored in the storage medium 5, as described above. When configuration is completed, the GMM of all users 8 are then sent to the other acoustic modules 2 in the building. This can be done via a home automation bus, WiFi, Bluetooth, or in any other suitable way as known by a person skilled in the art. Hence, at the end, all acoustic modules 2 present in the building will be configured without having to configure each of the acoustic modules 2 separately. Thus, all available electric or electronic devices in the home automation system can be configured without having to repeat all configuration steps for every new electric or electronic device 1.

The present invention also provides a method for activating at least one electric or electric device 1 in a home automation system 10 according to a predetermined setting preferred by a user 8 based on voice sound. The method is done in a home automation system 10 as described in the above embodiments.

The method comprises detecting a voice sound 9 by means of the acoustic sensor 3 that is part of the acoustic module 2. Upon detecting a voice sound of a user 8, the detected voice sound 9 is further analysed in the acoustic module 2. In the voice pattern recognition device 4, the detected voice pattern is determined and compared to stored known voice patterns. When the detected voice pattern is recognized as a stored voice pattern, it is correlated to parameters of a corresponding preferred setting of the at least one electric or electronic device 1 in the voice pattern correlation device 6.

In a last step, the at least one electric or electronic device 1 is activated according to the predetermined setting of the detected user 8.

## Claims

1. A home automation system (10) comprising:
- at least one electric or electronic device (1), and
- means (7) for sending a signal to the at least one electric or electronic device (1) for activating that at least one electric or electronic device (1) according to a predetermined setting.
wherein the home automation system further comprises at least one acoustic module (2), each of the at least one acoustic module (2) comprising:
- an acoustic sensor (3) for detecting voice sound (9),
- a voice pattern recognition device (4) for recognizing a voice pattern in the detected voice sound (9) and compare it to at least one known voice pattern stored in a storage medium (5) in the voice pattern recognition device (4), and
- a voice pattern correlation device (6) for, upon recognizing the detected voice pattern from the at least one stored voice pattern, correlating the detected voice pattern to parameters of the corresponding predetermined setting of the at least one electric or electronic device (1).

2. Home automation system (10) according to claim 1, the home automation system (10) comprising more than one acoustic module (2), wherein each of the at least one acoustic module (2) further comprises:
- means for sending stored parameters correlated to a particular voice pattern to at least one other acoustic module (2) at another location.

3. Home automation system (10) according to claim 1 or 2, the home automation system (10) comprising a plurality of electric or electronic devices (1), wherein sending a signal to the at least one electric or electronic device (1) comprises sending a signal to the plurality of devices (1) to activate these devices (1) according to the predetermined settings to create a mood.

4. Home automation system (10) according to any of the previous claims, wherein the acoustic module (2) is located in a wall or a ceiling of a building, or is located on top of a table, a closet or the like.

5. Home automation system (10) according to any of the previous claims, wherein the at least one electric or electronic device (1) is one of or a combination of a lighting device, an HVAC device, a motor for e.g. blinds, a ventilation device, or any other electric or electronic device that can be controlled in a home automation system.

6. Method for activating at least one electric or electric device (1) in a home automation system (10) according to a predetermined setting preferred by a user (8) based on voice sound (9), the method comprising:
- detecting a voice sound (9) by means of an acoustic sensor (3) that is part of an acoustic module (2), the acoustic module (2) further comprising a voice pattern recognition device (4) with a storage medium (5) and a voice pattern recognition device (6),
- in the voice pattern recognition device (4), analysing the detected voice sound (9) and determining a voice pattern by comparing to known voice patterns stored in the storage medium (5),
- in the voice pattern correlation device (6), correlating the detected voice pattern to parameters of a corresponding predetermined setting of the at least one electric or electronic device (1), and
- activating the at least one electric or electronic device (1) according to the predetermined setting of the user (8).

7. Method according to claim 6, further comprising, before detecting a voice sound (9), configuring the acoustic module (2) by:
- a user (8) reading some sentences,
- detecting, by the acoustic sensor (3), the voice sound (9) of the user (8),
- determining, by the voice pattern recognition device (4), the voice pattern of the voice sound (9) of that user (8), and
- storing that voice pattern in the storage medium (5) in the voice pattern recognition device (4) of the acoustic module (2).

8. Method according to claim 7, further comprising:
- correlating the stored voice patterns in the storage medium (5) to parameters of a predetermined setting of the at least one electric or electronic device (1).

9. Method according to any of claims 6 to 8, further comprising sending stored parameters correlated to a particular voice pattern to at least one other acoustic module (2) at another location.
